Europäisches Patentamt

European Patent Office

Office européen des brevets

(11) Veröffentlichungsnummer: **0 182 204**
**B1**

(12) **EUROPÄISCHE PATENTSCHRIFT**

(45) Veröffentlichungstag der Patentschrift:
17.05.89

(51) Int. Cl.⁴: **H02M 7/521, H02H 7/122**

(21) Anmeldenummer: 85114153.1

(22) Anmeldetag: 06.11.85

(54) Wechselrichter mit einer Brücke aus elektronischen Schaltern.

(30) Priorität: 19.11.84 DE 3442259

(43) Veröffentlichungstag der Anmeldung:
28.05.86 Patentblatt 86/22

(45) Bekanntmachung des Hinweises auf die Patenterteilung:
17.05.89 Patentblatt 89/20

(84) Benannte Vertragsstaaten:
DE FR

(56) Entgegenhaltungen:
CH-A- 373 463
DE-A- 2 233 152

(73) Patentinhaber: Siemens Aktiengesellschaft Berlin und München, Wittelsbacherplatz 2, D-8000 München 2(DE)

(72) Erfinder: Romándi, Dénes, Steigerwaldallee 7a,
D-8520 Erlangen(DE)

## Beschreibung

Die Erfindung betrifft einen Wechselrichter gemäß dem Oberbegriff des Patentanspruchs 1.

Ein Wechselrichter dieser Art ist in der DE-OS 2 834 561 beschrieben. Ein Anwendungsgebiet für einen solchen Wechselrichter ist die Röntgentechnik. Hier kann der Wechselrichter zur Speisung des Hochspannungstransformators eines Röntgengenerators dienen. In diesem Fall erfolgt die Speisung des Hochspannungstransformators mit einer wesentlich über der Netzfrequenz liegenden Frequenz, so daß der Hochspannungstransformator im Vergleich zu direkt vom Netz gespeisten Röntgengeneratoren wesentlich leichter und kleiner ausgebildet werden kann.

Für die zuverlässige Funktion eines Wechselrichters der genannten Art ist das sichere Löschen eines Brückenkurzschlusses durch eine Kurzschlußlöscheinrichtung von ausschlaggebender Bedeutung. Brückenkurzschlüsse können nie ganz ausgeschlossen werden und z.B. durch Fehlfunktionen der Röntgenröhre verursacht werden. Deshalb ist in der genannten DE-OS 2 834 561 eine Kurzschlußlöscheinrichtung beschrieben, die ein Ansprechen der Hauptsicherung bei sporadischer Fehlansteuerung der Wechselrichter-Schalter (Thyristoren), das einen Servicefall mit allen Nachteilen und Kosten bedeuten würde, verhindert.

Eine Löscheinrichtung der genannten Art funktioniert jedoch nur dann zuverlässig, wenn die Verteilung des Kurzschlußstromes in den einzelnen Wechselrichterzweigen annähernd gleich ist. Diese gleichmäßige Stromaufteilung ist jedoch bei mehr als einem Wechselrichter, d.h. bei der Parallelspeisung der Last durch mehrere Wechselrichter, z.B. einer Röntgenröhre durch zwei oder drei parallelgeschaltete Wechselrichter, schwer zu realisieren, und zwar wegen der Bauteiletoleranzen und der parasitären Induktivitäten. Auch bereits bei der Verwendung eines Wechselrichters kann es hinsichtlich der gleichmäßigen Verteilung des Kurzschlußstromes Probleme geben, wenn die unerwünschte Verdrahtungsinduktivität zu hoch ist.

In der CH-A 373 463 ist ein Stromrichter mit Halbleiterventilen beschrieben, der zur Gleichrichtung dient. Er besteht aus einer Reihe parallelgeschalteter Dioden mit in Reihe dazu liegenden ohmschen Widerständen. Die ohmschen Widerstände werden individuell so bemessen, daß der mittlere Strom in jedem der parallelen Zweige etwa gleich groß ist. Mit dem Problem der Symmetrierung von Kurzschlußströmen bei Wechselrichtern befaßt sich diese Schrift nicht.

Der Erfindung liegt die Aufgabe zugrunde, einen Wechselrichter der eingangs genannten Art so auszubilden, daß auf einfache Art eine symmetrische Stromaufteilung erzwungen wird.

Diese Aufgabe ist erfindungsgemäß durch die im kennzeichnenden Teil des Patentanspruchs 1 angegebene Ausbildung gelöst. Der Widerstand muß dabei groß genug für die gewünschte Kurzschluß-Symmetrierung, jedoch klein genug sein, um die Generatorleistung nicht zu beeinflussen und die Verlustleistung niedrig zu halten. Der Widerstandswert liegt dabei in der Größenordnung von einigen mOhm.

Die durch die erfindungsgemäße Lösung erreichte Symmetrierung des Kurzschlußstromes ist sehr gut und eine zweite Löscheinrichtung für den zweiten einer Gruppe von Wechselrichtern zur Speisung einer gemeinsamen Last kann ersatzlos entfallen.

Die Erfindung ist nachfolgend anhand eines in der Zeichnung dargestellten Ausführungsbeispieles näher erläutert. Es zeigen:

Fig. 1 das Schaltbild eines Wechselrichters nach der Erfindung,
Fig. 2 die konstruktive Ausbildung des Wechselrichters gemäß Figur 1, und
Fig. 3 eine Variante des Wechselrichters gemäß Figur 2.

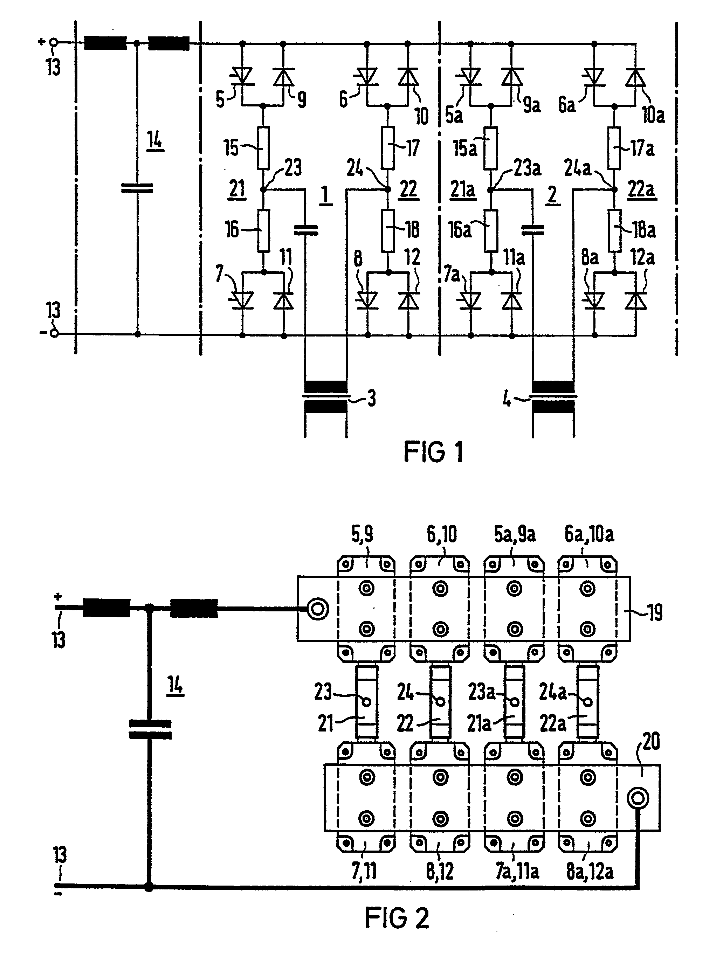

Der Wechselrichter gemäß Figur 1 besteht aus zwei Einzelwechselrichtern 1, 2, die gleichartig ausgebildet sind und über zwei Hochspannungstransformatoren 3, 4 eine gemeinsame Last, z. B. eine Röntgenröhre speisen. Die Einzelwechselrichter 1, 2 weisen je eine Brücke aus elektronischen Schaltern 5 bis 8 bzw. 5a bis 8a auf, in deren einer Diagonale die Last liegt und an deren anderer Diagonale eine Gleichspannungsquelle 13 angeschlossen ist. Die Gleichspannung wird den Einzelwechselrichtern 1, 2 über eine Kurzschlußlöscheinrichtung 14 zugeführt. Die Kurzschlußlöscheinrichtung 14 liegt dabei nach einem Siebkondensator, der parallel zum Ausgang eines Drehstromgleichrichters geschaltet ist, und dessen Ausgangsspannung demgemäß parallel dem Siebkondensator und dem Eingang der Kurzschlußlöscheinrichtung 14 zugeführt ist. Die beiden elektronischen Schalter 5, 7 und 6, 8 sowie 5a, 7a und 6a, 8a eines Brückenzweiges sind jeweils über zwei gleich große Widerstände 15, 16, 17, 18 bzw. 15a, 16a, 17a, 18a miteinander verbunden, an deren gemeinsamem Punkt die Last angeschlossen ist. Die Widerstände 15 bis 18 bzw. 15a bis 18a erzwingen dabei eine symmetrische Stromaufteilung auf die Schalter 5 bis 8 bzw. 5a bis 8a.

Die elektronischen Schalter 5 bis 8 bzw. 5a bis 8a sind durch Freilaufdioden 9 bis 12 bzw. 9a bis 12a überbrückt.

Aus der Figur 2 geht hervor, daß die Komponenten 5 bis 12 bzw. 5a bis 12a unter Messingstromschienen 19, 20 angeordnet sind, die die gemeinsamen Zuleitungen zu diesen Komponenten 5 bis 12 bzw. 5a bis 12a bilden (Pluspol und Minuspol). Die Widerstände 15 bis 18 bzw. 15a bis 18a sind dabei von Stromschienen 21, 22 bzw. 21a, 22a aus Widerstandsmaterial gebildet, die mit Anzapfungen 23, 24 bzw. 23a, 24a für den Anschluß der Last versehen sind.

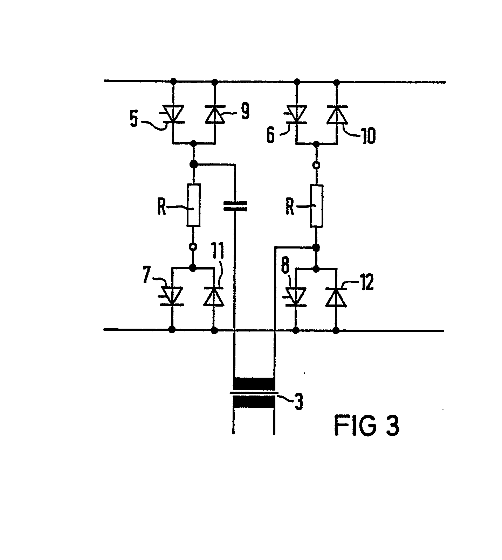

Die Figur 3 zeigt eine Wechselrichterausbildung, bei der die beiden Schalter eines jeden Brückenzweiges über einen einzigen Widerstand R miteinander verbunden sind, an dessen einem oder anderem Ende die Last angeschlossen ist. Auch diese Schaltung ermöglicht die Lösung der der Erfindung zugrundeliegenden Aufgabe.

## Patentansprüche

1. Wechselrichter mit einer Brücke aus elektronischen Schaltern (5–8 bzw. 5a–8a), in deren einer Diagonale die Last (3 bzw. 4) liegt und an deren anderer Diagonale eine Gleichspannungsquelle (13) angeschlossen ist, dadurch gekennzeichnet, daß die beiden Schalter (5, 7; 6, 8 bzw. 5a, 7a; 6a, 8a) eines Brückenzweiges über als Stromschienen aus Widerstandsmaterial ausgebildete Widerstände (21, 22; 21a, 22a; R) miteinander verbunden sind, an denen die Last (3, 4) angeschlossen ist, und daß der Widerstandswert der Widerstände (21, 22; 21a, 22a; R) in der Größenordnung von einigen mOhm liegt.

2. Wechselrichter nach Anspruch 1, dadurch gekennzeichnet, daß die Widerstände (21, 22; 21a, 22a) mit einer Mittelanzapfung (23, 24; 23a, 24a) versehen sind, an der die Last (3, 4) angeschlossen ist.

3. Wechselrichter nach Anspruch 1, dadurch gekennzeichnet, daß die Last (3, 4) an dem einen oder anderen Ende der Widerstände (R) angeschlossen ist.

## Claims

1. Inverter having a bridge consisting of electronic switches (5–8 or 5a–8a), in the one diagonal of which the load (3 or 4) lies and to the other diagonal of which a direct voltage source (13) is connected, characterised in that the two switches (5, 7; 6, 8 or 5a, 7a; 6a, 8a) of a bridge arm are connected with each other by way of resistors (21, 22; 21a, 22a; R) which are developed as conductor rails of resistance material and to which the load (3, 4) is connected and in that the resistance value of the resistors (21, 22; 21a, 22a; R) lies in the order of magnitude of a few milliohm.

2. Inverter according to claim 1, characterised in that the resistors (21, 22; 21a, 22a) are provided with a centre tap (23, 24; 23a, 24a) to which the load (3, 4) is connected.

3. Inverter according to claim 1, characterised in that the load (3, 4) is connected to the one or to the other end of the resistors (R).

## Revendications

1. Onduleur comportant un pont formé d'interrupteurs électroniques (5–8 ou 5a–8a), dans une diagonale duquel la charge (3 ou 4) est située et aux bornes de l'autre diagonale duquel est raccordée une source de tension continue (13), caractérisé par le fait que les deux interrupteurs (5, 7; 6, 8 ou 5a, 7a; 6a, 8a) d'une branche du pont sont reliés entre eux par l'intermédiaire de résistances (21, 22; 21a, 22a; R), qui sont réalisées sous la forme de rails conducteurs formés d'un matériau résistif et auxquelles est raccordée la charge (3, 4), et que la valeur résistive des résistances (21, 22; 21a, 22a; R) est de l'ordre de quelques milliohms.

2. Onduleur suivant la revendication 1, caractérisé par le fait que les résistances (21, 22; 21a, 22a) sont pourvues d'une prise médiane (23, 24; 23a, 24a), à laquelle est raccordée la charge (3, 4).

3. Onduleur suivant la revendication 1, caractérisé par le fait que la charge (3, 4) est raccordée à l'une ou à l'autre des extrémités des résistances (R).

FIG 1

FIG 2

FIG 3